# EUROPÄISCHE PATENTSCHRIFT

(11) **EP 2 989 944 B1**
(45) Veröffentlichungstag und Bekanntmachung des Hinweises auf die Patenterteilung: **14.06.2017**
(21) Anmeldenummer: 15181905.9
(22) Anmeldetag: 21.08.2015
(51) Int. Cl.: A47J 31/44

(54) **VORRICHTUNG UND VERFAHREN ZUM ERZEUGEN VON MILCHSCHAUM**
DEVICE AND METHOD FOR GENERATING MILK FOAM
DISPOSITIF ET PROCEDE DE PRODUCTION DE MOUSSE DE LAIT

(30) Priorität: 26.08.2014 DE 102014112178
(43) Veröffentlichungstag der Anmeldung: 02.03.2016
(73) Patentinhaber: Melitta Professional Coffee Solutions GmbH & Co., KG, 32429 Minden (DE)
(72) Erfinder: BUCHHOLZ, Bernd, 32369 Rahden (DE); DIESTER, Thomas, 31675 Bückeburg (DE)
(74) Vertreter: Specht, Peter

(56) Entgegenhaltungen:
- EP-A1- 2 042 063
- EP-A1- 2 220 972
- EP-A1- 2 294 952
- WO-A1-91/00041

## Beschreibung

Die Erfindung betrifft eine Vorrichtung zur Herstellung eines Milch- Luft-Gemisches, die eine Steuerung der Luftzufuhr für das Milch- Luft- Gemisch vorsieht, um die Konsistenz des Milch- Luft- Gemisches zu verändern, sowie ein Verfahren zur Herstellung des Milch- Luft- Gemisches.

Die Herstellung von Milchschaum, d.h. eines Gemisch aus Milch und Luft mit ggf. einer entsprechenden Erwärmung, ist aus dem Stand der Technik in verschiedensten Ausführungsformen bekannt und kommt beispielsweise in Kaffeevollautomaten zur Anwendung. Die EP 2 298 142 B1 offenbart eine Vorrichtung zum Aufschäumen von Milch, die zur Steuerung der zugeführten Luftmenge ein intermittierendes Luftventil umfasst. Das Luftventil ist ein Magnetventil, das zwischen zwei Zuständen umschaltbar ist. Mit dem Luftventil wird der mittlere Luftdurchlass durch wiederholtes Umschalten zwischen den beiden Zuständen des Luftventils gesteuert. Die Einstellung der Luftzufuhr über entsprechende Bauteile wie beispielsweise Nadel-Magnetventile (z. B. Injektionsventile) ist allerdings aufwendig und führt auch oftmals nicht zu den gewünschten Ergebnissen.

Zudem kann sich die Konsistenz des Milchschaums beim Erwärmen, insbesondere mit Hilfe von heißem Wasserdampf, verändern. Außerdem ist es erwünscht, die Konsistenz des Milchschaums je nach Kaffeegetränk gezielt variieren zu können. Daher muss z. B. der Milch zur Herstellung eines kalten Milchschaums mehr Luft zugeführt werden, als zur Herstellung eines warmen Milchschaums.

Die optimale einzubringende Luftmenge ist dabei abhängig von den vorliegenden Rahmenbedingungen wie z. B. Milchsorte, Milchtemperatur, Ansaughöhe, eingesetzten Komponenten (z. B. Leitungslängen) usw. Selbst die Umgebungstemperatur bzw. die Temperatur der angesaugten Luft hat einen Einfluss. Mit einer fixen, statischen Einstellung kann somit kein optimales Ergebnis erreicht werden. Eine entsprechende Einstellung ist nur mit Einschränkungen möglich.

Daher ist es auch bekannt, die Luft der Milch durch verschiedene Zuleitungen ansaugend zuzuführen, in denen Drosseln verschiedenen Öffnungsquerschnitts vorgesehen sind. Hier wird nicht die Luftmenge, die in die Milch gepumpt wird variiert sondern es wird über verschiedene Querschnitte verschieden viel Milch in die Luft gesaugt.

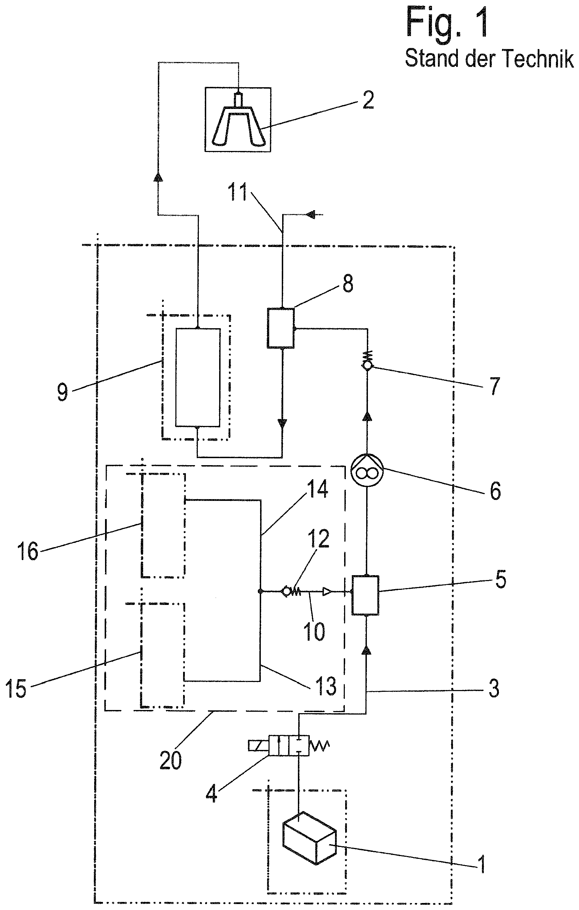

Die DE 10 2013 104 339.9 offenbart eine solche vorteilhafte Vorrichtung und ein zugehöriges Verfahren zur Herstellung von Milchschaum. Die dort beschriebene Vorrichtung zur Herstellung des Milchschaums zeigt die Fig. 1. Bei dem Verfahren zur Herstellung von Milchschaum wird zum Fördern von Milch eine zur Veränderung der Förder- und Pumpmenge an Milch einstellbare Milchpumpe verwendet. Die Milchpumpe ist hinsichtlich ihrer Drehzahl veränderbar. Dadurch ist nicht nur die Fördermenge der Milch in einfacher Weise einstellbar. Sondern zudem können durch die Variation der Drehzahl die Eigenschaften des hergestellten Milchschaums, insbesondere seine Konsistenz, durch Ansaugen verschiedener Luftmengen variiert werden. Um mit der Vorrichtung sowohl warmen als auch kalten Milchschaum herstellen zu können, weist sie zwei Zweigleitungen für die Luftzufuhr auf, die jeweils an eine Luftquelle angeschlossen sind. In den Zweigleitungen sind Absperrventile und/oder Drosseln verschieden Öffnungsquerschnitts angeordnet, um die der Milch zugeführte Luftmenge verändern zu können. Die Druckschrift EP-A-2 042 063 offenbart ein Verfahren zum Herstellen von Milchschaum, mit folgenden Schritten: a) Fördern von Milch in einer Milchleitung mittels einer Milchpumpe 5, und gleichzeitig Ansaugen von Luft durch eine Luftleitung, wobei zur Veränderung der angesaugten Luftmenge eine Drossel 12 verwendet wird, b) Mischen von Milch und Luft in einer Mischkammer zum Erzeugen einer Luft-Milch-Emulsion, wobei in Schritt a) eine solche Drossel 12 verwendet wird, die hinsichtlich der Größe ihres Öffnungsquerschnitts stufenlos einstellbar ausgebildet ist. Die Erfindung hat die Aufgabe, ein Verfahren und eine Vorrichtung zur Herstellung von Milchschaum zu schaffen, mit denen die Eigenschaften des Milchschaums, wie z. B. Temperatur, Konsistenz, Dichte, Beschaffenheit usw. noch definierter einstellbar sind.

Die Erfindung löst diese Aufgabe in Hinsicht auf das Verfahren durch den Gegenstand des Patentanspruchs 1, und in Hinsicht auf die Vorrichtung durch den Gegenstand des Patentanspruchs 5. Vorteilhafte Ausführungsformen sind in den abhängigen Ansprüchen genannt.

Die stufenlose Einstellung des Öffnungsquerschnitts der Drossel ermöglicht die Einstellung der der Milch zugeführten Luftmenge in Abhängigkeit von dem gewünschten Milch- Luft Gemisch. Dadurch können mit nur einer einstellbaren Drossel Milch- Luft- Gemische, insbesondere Milchschäume, mit unterschiedlichen Eigenschaften hergestellt werden.

Es ist bevorzugt, dass der Milch zur Herstellung eines warmen Milch- Luft- Gemisches weniger Luft zugeführt wird, als zur Herstellung eines kalten Milch- Luft- Gemisches. Der Öffnungsquerschnitt der Drossel ist daher während der Herstellung des warmen Milch- Luft- Gemisches bevorzugt kleiner, als bei der Herstellung des kalten Milch- Luft- Gemisches. Weiterhin kann die Konsistenz des Milch-Luft-Gemisches weitgehend unabhängig von der Temperatur durch Änderung des Öffnungsquerschnitts variiert werden.

Die erfindungsgemäße Vorrichtung benötigt zur Veränderung der der Milch zugeführten Luftmenge daher nicht mehrere Zweigleitungen mit Absperrventilen und/oder Drosseln verschieden Öffnungsquerschnitts.

Eine Drossel, die hinsichtlich der Größe ihres Öffnungsquerschnitts stufenlos, mittels eines Elektromotors, einstellbar ausgebildet ist, wird im Folgenden als einstellbare Drossel bezeichnet.

Für die Einstellung des Öffnungsquerschnitts der einstellbaren Drossel wird ein Elektromotor verwendet.

Dabei wird der Öffnungsquerschnitt in Abhängigkeit von dem hergestellten Milch- Luft- Gemisch vor seiner Herstellung jeweils einmalig eingestellt. Bei der Herstellung des Milch- Luft- Gemisches erfolgt die Einstellung der Luftmenge hier daher gerade nicht durch ein intermittierendes Umschalten eines Ventils zwischen zwei Zuständen. Speziell zur Herstellung von Milchschaum wird der Öffnungsquerschnitt vorzugsweise in Abhängigkeit von den Eigenschaften des Milchschaums, insbesondere seiner Konsistenz und/oder Temperatur, vor seiner Herstellung jeweils einmalig eingestellt.

Dabei wird die Förder- und Pumpmenge der Milchpumpe gesteuert. Dadurch ist die Konsistenz des Milchschaums veränderbar.

Die Aufgabe wird weiterhin gelöst mit einer Vorrichtung zum Erzeugen eines Milch- Luft- Gemisches, insbesondere zum Erzeugen von Milchschaum. Die Vorrichtung ist zum Durchführen des Verfahrens vorgesehen. Sie weist eine von Milch durchflossene Milchleitung auf, in der eine Milchpumpe zur Förderung der Milch angeordnet ist. An die Milchleitung ist eine Luftleitung angeschlossen, durch die der Milch Luft zuführbar ist. In der Luftleitung ist eine Drossel angeordnet, mit einer Durchlassöffnung, die einen Öffnungsquerschnitt aufweist.

Die Vorrichtung zeichnet sich dadurch aus, dass der Öffnungsquerschnitt der Drossel stufenlos veränderbar ist. Die Drossel ist daher eine einstellbare Drossel. Dadurch ist die zugeführte Luftmenge in Abhängigkeit von den gewünschten Eigenschaften, wie z. B. Temperatur und/oder Konsistenz, des hergestellten Milch- Luft- Gemisches einstellbar. Der Öffnungsquerschnitt der Durchlassöffnung ist mittels eines Elektromotors veränderbar.

Die einstellbare Drossel oder der Elektromotor selbst können mit einer zusätzlichen absoluten oder inkrementalen Wegmess- oder Positionserkennung ausgestattet sein.

Es ist bevorzugt, dass die Vorrichtung die Gerätesteuerung aufweist und dass diese dazu eingerichtet ist, den Öffnungsquerschnitt jeweils vor der Herstellung eines Milch- Luft- Gemisches einmalig einzustellen. Ein Produkt kann dabei mehrere verschiedene Bestandteile von Milch-Luft-Gemischen oder Milch haben. Die Gerätesteuerung ist zudem dazu ausgelegt, die Förder- und Pumpmenge der Milchpumpe vor der Herstellung eines Milch- Luft- Gemisches einer definierten Eigenschaft einzustellen. Während der Herstellung mit bekanntem Öffnungsquerschnitt der einstellbaren Drossel und einer bekannten für die Herstellung vorgegebenen Fördermenge der Milchpumpe sind die Eigenschaften wie z. B. Konsistenz und Temperatur des hergestellten Milch- Luft- Gemisches reproduzierbar, und daher kontrollierbar.

Vorteilhaft und bevorzugt ist ein Schliessen der Schließen der Luftleitung dadurch realisierbar ist, dass mit der einstellbaren Drossel der Öffnungsquerschnitt schließbar ist und geschlossen wird.

Weiter vorteilhaft und bevorzugt ist ein Schliessen der Luftleitung dadurch realisierbar ist, dass mit der einstellbaren Drossel der Öffnungsquerschnitt schließbar ist bzw. auch bei Bedarf geschlossen wird. Der Öffnungsquerschnitt der Durchlassöffnung ist auf einfache Weise mittels eines Elektromotors M veränderbar.

Die Vorrichtung und das Verfahren ermöglichen daher die Herstellung von Milch- Luft- Gemischen mit einer weitgehenden Einstellung definierter Eigenschaften wie z. B. Temperatur und Konsistenz.

Die Aufgabe wird weiterhin gelöst mit einem Heißgetränkeautomaten, insbesondere einem Kaffeevollautomaten, mit einer solchen Vorrichtung zum Erzeugen eines Milch- Luft- Gemisches, insbesondere Milchschaum. Dabei ist es bevorzugt, dass die Milch- Luft- Gemische allein ausgegeben werden, oder gemeinsam mit einem Heißgetränk.

Nachfolgend wird die Erfindung unter Bezug auf die Zeichnung anhand eines Ausführungsbeispiels näher beschreiben. Es zeigt:
- Fig. 1: eine schematische Darstellung des Aufbaus einer Vorrichtung zum Herstellen von Milch- Luft- Gemischen, insbesondere von Milchschaum, nach dem Stand der Technik;
- Fig. 2: eine schematische Darstellung des Aufbaus einer erfindungsgemäßen Vorrichtung zum Herstellen von Milch- Luft- Gemischen, insbesondere von Milchschaum.

Fig. 1 zeigt die in der Druckschrift DE 10 2013 104 339.9 offenbarte Vorrichtung zur Herstellung von Milch basierenden Produkten.

Im Folgenden werden die Begriffe Milch- Luft- Gemisch und Milchschaum synonym verwendet.

Die Vorrichtung weist folgenden Aufbau auf:
Eine Milchleitung 3 verbindet einen Milchbehälter 1 und eine Auslassvorrichtung 2 miteinander. Die Auslassvorrichtung 2 ist als Auslauf ausgebildet. Im Folgenden werden die Begriffe Auslassvorrichtung 2 und Auslauf synonym verwendet. Dabei sind in die Milchleitung 3 zwischen dem Milchbehälter 1 und dem Auslauf 2 in dieser Reihenfolge hier folgende Komponenten geschaltet:
   ein Absperrventil 4, eine erste Mischkammer 5, eine Milchpumpe 6, ein erstes Rückschlagventil 7, eine zweite Mischkammer 8 und eine Nachbehandlungsvorrichtung 9.

Die Vorrichtung weist zudem ein Luftzuführsystem 20 auf, mit einer Luftleitung 10, die in die erste Mischkammer 5 mündet. In die Luftleitung 10 ist ein zweites Rückschlagventil 12 geschaltet. Sie verzweigt sich vor dem zweiten Rückschlagventil 12 in zwei Zweigleitungen 13, 14. Beide Zweigleitungen 13, 14 sind mit einer Luftquelle 15 oder 16 (einer Luftpumpe oder einem Druckbehälter oder die Umgebung oder dgl.) verbunden.

Vorzugsweise sind in die Zweigleitung 10 Vorrichtungen wie ein Absperrventil (nicht gezeigt), eine oder mehrere herkömmliche Drosseln (nicht gezeigt) und/oder dgl. geschaltet, um die Luftzufuhr zu starten und unterbrechen zu können. Eine herkömmliche Drossel bietet den Vorteil, dass stets eine genau definierte Luftmenge zugegeben wird. Solche Drosseln sind dem Fachmann an sich bekannt und sind daher in dieser Figur nicht dargestellt. Die Anordnung der beiden Zweigleitungen 13, 14 ermöglicht durch getrennte oder gemeinsame Nutzung der beiden Zweigleitungen 13, 14, und/oder durch die Verwendung von herkömmlichen Drosseln mit verschiedenem Öffnungsquerschnitt eine Veränderung der zugeführten Luftmenge.

In die zweite Mischkammer 8 mündet ferner eine Dampfzuleitung 11, durch die heißer Wasserdampf aus einer Wasserdampfquelle (hier nicht dargestellt) in die Milchleitung 3 geleitet werden kann.

Die Funktion dieser Vorrichtung ist wie folgt:
Mittels der in die Milchleitung 3 geschalteten Milchpumpe 6 wird Milch aus dem Milchbehälter 1 zum Auslauf 2 gefördert. Dieses Fördern erfolgt vorzugsweise während der Dauer der Milchschaumherstellung kontinuierlich.

Dabei wird das Absperrventil 4 zunächst von der dargestellten Sperrstellung in seine Durchlassstellung geschaltet.

Die Milch wird sodann aus dem Milchbehälter 1 in und durch die erste Mischkammer 5 gefördert. In der ersten Mischkammer 5 - in einfacher Form beispielsweise nach Art eines T-Stückes mit einer im Durchmesser vergrößerten Mischkammerbereich ausgestaltet (hier nicht dargestellt) - wird in die durch die Milchleitung 3 strömende Milch Luft geleitet, derart, dass sich die Milch mit der zuströmenden Luft zu einem schaumartigen Milch-Luft-Gemisch vermischt. Das Milch- Luft- Gemisch ist emulsionsartig ausgebildet, so dass in der Milch Luftbläschen eingeschlossen sind.

Der durch die erste Mischkammer 5 strömenden Milch wird während der Milchschaumerzeugung kontinuierlich eine konstante Menge Luft zugesetzt, um ein Milch-Luft-Gemisch möglichst gleichbleibender Eigenschaft zu erzeugen.

Das in der ersten Mischkammer erzeugte Milch-Luft-Gemisch wird durch die Milchpumpe 6 gefördert, in welcher sie verdichtet wird. Dabei wird eine hinsichtlich der Fördermenge einstellbare Milchpumpe 6 verwendet.

Das aus der Milchpumpe 6 aus- und weiterströmende, verdichtete Milch-Luft-Gemisch wird durch eine Dekompressionsstrecke, in welcher die zweite Mischkammer 8 zwischen geschaltet ist, gefördert. In der zweiten Mischkammer 8, die beispielsweise nach Art eines T-Stückes ausgebildet ist, wird dem Milch-Luft-Gemisch optional aus der Leitung 11 zuströmender heißer Wasserdampf zugesetzt, um die Temperatur des verdichteten Mich-Luft-Gemisches zu erhöhen und einen erwärmten Milchschaum zu erzeugen. Dabei ist die Menge des zuströmenden Wasserdampfes bevorzugt veränderbar, um den Grad der Erwärmung des Milch- Luft- Gemisches anpassen zu können.

An die zweite Mischkammer 8 schließt sich ein Dekompressionsabschnitt der Milchleitung 3 an, der in die Nachbehandlungsvorrichtung 9 mündet.

Das aus der zweiten Mischkammer 8 und dem Dekompressionsabschnitt ausströmende, gegebenenfalls erwärmte Milch- Luft- Gemisch wird zunächst in der Nachbehandlungsvorrichtung 9 nachbehandelt, um die Schaumqualität gezielt zu verändern.

Die Nachbehandlungsvorrichtung 9 weist einen Homogenisator 95 auf, der dazu vorgesehen ist, den Milchschaum zu homogenisieren. Dabei werden die Luftbläschen verkleinert und gleichmäßiger in der Milch verteilt.

Die Art und Intensität der Nachbehandlung ist dabei besonders von der Förderleistung bzw. der Drehzahl der Milchpumpe 6 abhängig, also von dem Druck, mit welchem die Milchpumpe 6 den Milchschaum in die Nachbehandlungsvorrichtung 9 hineinpumpt.

Aus der Nachbehandlungsvorrichtung 9 wird der homogenisierte Milchschaum 40 durch den Auslauf 2 in ein Gefäß (nicht gezeigt), beispielsweise in eine Tasse, ausgegeben.

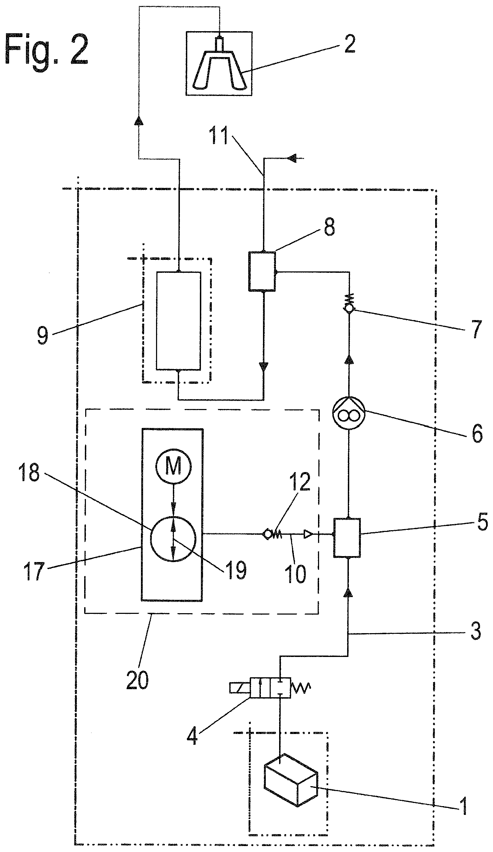

Anzumerken ist noch, dass nach den Ausführungsbeispielen der Fig. 1 und 2 jeweils eine Geräte-Steuerung(svorrichtung) vorgesehen ist. Vorzugweise und vorteilhaft sind verschiedene Kombinationen von Drosselquerschnittseinstellungen in einer Steuerung hinterlegt und für die Einstellung von Produktbestandteilen anwählbar. Es ist ferner vorteilhaft und bevorzugt, wenn verschiedene Kombinationen von Drosselquerschnittseinstellungen und/oder Pumpendrehzahl(en) in der Steuerung hinterlegt und für die Einstellung von Produktbestandteilen anwählbar sind.

Die in der Fig. 2 dargestellte, erfindungsgemäße Vorrichtung unterscheidet sich von der Vorrichtung der Fig. 1 durch das Luftzuführsystem 20.

Es weist nur eine Luftleitung 10 auf, die an eine Luftquelle angeschlossen ist. Die Luftquelle kann auch die Umgebung sein. Anstelle einer herkömmlichen Drossel ist in der Luftleitung 10 eine einstellbare Drossel 17 angeordnet, die eine Durchlassöffnung 18 aufweist, deren Öffnungsquerschnitt 19 stufenlos einstellbar ist. Die einstellbare Drossel 17 ist hier schematisch dargestellt.

Der Öffnungsquerschnitt 19 ist mittels eines Elektromotors M, insbesondere eines Gleichstrommotors stufenlos einstellbar. Dies ist durch einen Pfeil schematisch gezeigt.

Bei dieser Vorrichtung wird der Öffnungsquerschnitt 19 der Durchlassöffnung 18 der Drossel 17 vor dem Bezug des Milchschaums einmalig eingestellt. Dafür weist die Vorrichtung eine Gerätesteuerung (nicht gezeigt) auf, die dazu eingerichtet ist, den Öffnungsquerschnitt 19 durch Ansteuern des Elektromotors M in Abhängigkeit von dem gewünschten Milchschaum, insbesondere von der Temperatur des Milchschaums, einzustellen. Während der Herstellung des Milchschaums ist die zugeführte Luftmenge dann vorzugsweise aber nicht zwingend konstant.

Die Konsistenz des Milchschaums wird dann durch Einstellen der Fördermenge der Milchpumpe 6 verändert. Auch kann die Luftmenge zusätzlich durch die ansaugende Milchpumpe variiert werden.

Die Vorrichtung ist auch derart ausgestaltbar, dass sie eine Luftleitung zum Zuführen von Warmluft, eine Luftleitung zum Zuführen von Kaltluft, und/oder eine Luftleitung zum Zuführen von Warmluft und Kaltluft aufweist, wobei in zumindest einer oder beiden der Luftleitungen die einstellbare Drossel angeordnet ist.

**Bezugszeichenliste**

| | |
|---|---|
| Milchbehälter | 1 |
| Auslassvorrichtung | 2 |
| Milchleitung | 3 |
| Absperrventil | 4 |
| erste Mischkammer | 5 |
| Milchpumpe | 6 |
| Rückschlagventil | 7 |
| Zweite Mischkammer | 8 |
| Nachbehandlungsvorrichtung, Homogenisator | 9 |
| Luftleitung | 10 |
| Dampfzuleitung | 11 |
| Rückschlagventil | 12 |
| Zweigleitungen | 13, 14 |
| Luftquelle | 15 |
| Luftquelle | 16 |
| einstellbare Drossel | 17 |
| Durchlassöffnung | 18 |
| Öffnungsquerschnitt | 19 |
| Elektromotor | M |
| Homogenisator | 95 |

## Patentansprüche

1. Verfahren zum Herstellen von Milch- Luft- Gemischen, insbesondere Milchschaum, mit folgenden Schritten:
a) Fördern von Milch in einer Milchleitung (3) mittels einer Milchpumpe (6), und gleichzeitig Ansaugen von Luft durch eine Luftleitung (10, 13, 14), wobei zur Veränderung der angesaugten Luftmenge zumindest eine Drossel (17) verwendet wird,
b) Mischen von Milch und Luft in einer ersten Mischkammer (5) zum Erzeugen einer Luft-Milch-Emulsion,
c) ggf. Zusetzen von Dampf zur Luft-Milch-Emulsion zum Erwärmen der Luft-Milch-Emulsion (vorzugsweise nach Schritt b), wenn ein warmer Milchschaum erzeugt werden soll,
**dadurch gekennzeichnet, dass**
d) in Schritt a) eine solche Drossel (17) verwendet wird, die hinsichtlich der Größe ihres Öffnungsquerschnitts (19) stufenlos mittels eines Elektromotors (M) einstellbar ausgebildet ist, und
e) die Förder- und Pumpmenge der Milchpumpe (6) gesteuert wird und dass hierdurch die angesaugte Luftmenge zusätzlich variierbar ist, und
f) dass der Öffnungsquerschnitt (19) in Abhängigkeit von dem hergestellten Milch- Luft- Gemisch vor seiner Herstellung jeweils einmalig eingestellt wird.

2. Verfahren nach Anspruch 1, **dadurch gekennzeichnet, dass** der Öffnungsquerschnitt (19) zur Herstellung von Milchschaum in Abhängigkeit von den Eigenschaften des Milchschaums, insbesondere seiner Temperatur und/oder Konsistenz, vor seiner Herstellung jeweils einmalig eingestellt wird.

3. Verfahren nach einem der vorstehenden Ansprüche, **dadurch gekennzeichnet, dass** verschiedene Kombinationen von Drosselquerschnittseinstellungen in einer Steuerung hinterlegt und für die Einstellung von Produktbestandteilen anwählbar sind.

4. Verfahren nach einem der vorstehenden Ansprüche, **dadurch gekennzeichnet, dass** verschiedene Kombinationen von Drosselquerschnittseinstellungen und/oder Pumpendrehzahl(en) in der Steuerung hinterlegt und für die Einstellung von Produktbestandteilen anwählbar sind.

5. Vorrichtung zum Erzeugen eines Milch- Luft- Gemisches, insbesondere Milchschaum, mit einer von Milch durchflossenen Milchleitung (3), in der eine Milchpumpe (6) zur Förderung der Milch angeordnet ist, wobei an die Milchleitung (3) eine Luftleitung (10, 13, 14) angeschlossen ist, durch die der Milch Luft zuführbar ist, **dadurch gekennzeichnet, dass**
- in der Luftleitung (10, 13, 14) eine Drossel (17) angeordnet ist, mit einer Durchlassöffnung (18), die einen Öffnungsquerschnitt (19) aufweist, der stufenlos veränderbar ist, wobei der Öffnungsquerschnitt (19) der Durchlassöffnung (18) mittels eines Elektromotors (M) veränderbar ist, und
- die Förder- und Pumpmenge der Milchpumpe (6) gesteuert ist und das hierdurch die angesaugte Luftmenge zusätzlich variierbar ist.

6. Vorrichtung nach Anspruch 5, **dadurch gekennzeichnet, dass** ein Schliessen der Luftleitung dadurch realisierbar ist, dass mit der einstellbaren Drossel (17) der Öffnungsquerschnitt schließbar ist.

7. Vorrichtung nach einem der Ansprüche 5 bis 6, **dadurch gekennzeichnet, dass** der eingestellte Öffnungsquerschnitt der Durchlassöffnung über ein absolutes oder inkrementales Wegmesssystem messbar ist und/oder gemessen wird.

8. Vorrichtung nach einem der Ansprüche 5 - 7, **dadurch gekennzeichnet, dass** sie eine Luftleitung (13) zum Zuführen von Warmluft, eine Luftleitung (14) zum Zuführen von Kaltluft, und/oder eine Luftleitung (10) zum Zuführen von Warmluft und Kaltluft aufweist, wobei in zumindest einer der Luftleitungen (10, 13, 14) die einstellbare Drossel (17) angeordnet ist.

9. Heißgetränkeautomat mit einer Vorrichtung zum Erzeugen von Milchschaum nach einem der Ansprüche 5 - 8.

## Claims

1. Method of producing milk-air mixtures, particularly milk foam, comprising the following steps:
a) conveying milk in a milk duct (3) by means of a milk pump (6) and simultaneous suction of air through an air duct (10, 13, 14), wherein at least one throttle (17) is used for changing the inducted quantity of air,
b) mixing milk and air in a first mixing chamber (5) for producing an air-milk emulsion, and
c) optionally adding steam to the air-milk emulsion for heating the air-milk emulsion (preferably according to step b)) when a warm milk foam is to be produced,
**characterised in that**
d) use is made in step a) of a throttle (17) which with respect to the size of its opening cross-section (19) is constructed to be settable steplessly by means of an electric motor (M),
e) the conveying and pumping quantity of the milk pump (6) is controlled and thereby the inducted air quantity is additionally variable and
f) the opening cross-section (19) is set once each time in dependence on the produced milk-air mixture before it is produced.

2. Method according to claim 1, **characterised in that** the opening cross-section (19) is set once each time for production of milk foam in dependence on the properties of the milk foam, particularly its temperature and/or consistency, before it is produced.

3. Method according to one of the preceding claims, **characterised in that** different combinations of throttle cross-section settings are filed in a control and are selectable for the setting of product components.

4. Method according to any one of the preceding claims, **characterised in that** different combinations of throttle cross-section settings and/or pump rotational speeds are filed in the control and selectable for the setting of product components.

5. Device for producing a milk-air mixture, particularly milk foam, with a milk duct (3), which is flowed through by milk and in which a milk pump (6) for conveying the milk is arranged, wherein an air duct (10, 13, 14), through which air can be fed to the milk, is connected with the milk duct (3), **characterised in that**
- arranged in the air duct (10, 13, 14) is a throttle (17) with a throughflow opening (18) having an opening cross-section (19) which is steplessly variable, wherein the opening cross-section (19) of the throughflow opening (18) is variable by means of an electric motor (M), and
- the conveying and pumping quantity of the milk pump (6) is controlled and thereby the inducted air quantity is additionally variable.

6. Device according to claim 5, **characterised in that** closing of the air duct can be realised **in that** the opening cross-section is closable by the settable throttle (17).

7. Device according to one of claims 5 and 6, **characterised in that** the set opening cross-section of the throughflow opening is measurable and/or measured by way of an absolute or incremental travel measuring system.

8. Device according to any one of claims 5 to 7, **characterised in that** it comprises an air duct (13) for the feed of warm air, an air duct (14) for the feed of cold air and/or an air duct (10) for the feed of warm air and cold air, wherein the settable throttle (17) is arranged in at least one of the air ducts (10, 13, 14).

9. Hot drink machine with a device for producing milk foam according to any one of claims 5 to 8.

## Revendications

1. Procédé d'obtention de mélanges lait-air, en particulier de mousse de lait comprenant les étapes suivantes consistant à :
a) refouler du lait dans une conduite de lait (3) au moyen d'une pompe à lait (6) et simultanément aspirer de l'air par une conduite d'air (10, 13, 14), au moins une soupape d'étranglement (17) étant utilisée pour permettre de faire varier la quantité d'air aspirée,
b) mélanger du lait et de l'air dans une première chambre de mélange (5) pour obtenir une émulsion air-lait,
c) le cas échéant, ajouter de la vapeur à l'émulsion air-lait pour chauffer cette émulsion air-lait (de préférence après l'étape b), lorsqu'une mousse de lait chaude doit être obtenue,
**caractérisé en ce que**
d) dans l'étape a) on utilise une soupape d'étranglement (17) dont les dimensions de la section d'ouverture (19) peuvent être réglées en continu au moyen d'un moteur électrique (M),
e) le débit de refoulement et de pompage de la pompe à lait (6) est commandé et peut en outre être modifié par le débit d'air aspiré au travers de celle-ci, et
f) la section d'ouverture (19) est réglée respectivement en une seule fois en fonction du mélange lait-air obtenu avant son obtention.

2. Procédé conforme à la revendication 1,
**caractérisé en ce que**
la section d'ouverture (19) permettant l'obtention d'une mousse de lait est réglée respectivement en une seule fois avant son obtention en fonction des propriétés de la mousse de lait, en particulier sa température et/ou sa consistance.

3. Procédé conforme à l'une des revendications précédentes,
**caractérisé en ce que**
différentes combinaisons de réglages de la section de la soupape d'étranglement sont déposées dans une commande et peuvent être choisies pour le réglage des composants du produit.

4. Procédé conforme à l'une des revendications précédentes,
**caractérisé en ce que**
différentes combinaisons de réglages de la section de la soupape d'étranglement et/ou de la vitesse de rotation de la pompe sont déposées dans la commande et peuvent être sélectionnées pour le réglage des composants du produit.

5. Dispositif permettant d'obtenir un mélange lait-air, en particulier d'une mousse de lait comprenant une conduite de lait (3) dans laquelle circule du lait et dans laquelle est montée une pompe à lait (6) permettant de refouler le lait, sur la conduite de lait (3) étant branchée une conduite d'air (10, 13, 14) par laquelle de l'air peut être transféré dans le lait,
**caractérisé en ce que**
- dans la conduite d'air (10, 13, 14) est montée une soupape d'étranglement (17) ayant une ouverture de passage (18) ayant une section d'ouverture (19) pouvant être modifiée en continu, la section d'ouverture (19) de l'ouverture de passage (18) pouvant être modifiée au moyen d'un moteur électrique (M), et
- le débit de refoulement et de pompage de la pompe à lait (6) est commandé et le débit d'air aspiré au travers de celle-ci peut en outre être modifié.

6. Dispositif conforme à la revendication 5,
**caractérisé en ce que**
la conduite d'air peut être fermée en fermant la section d'ouverture avec la soupape d'étranglement réglable (17).

7. Dispositif conforme à l'une des revendications 5 et 6,
**caractérisé en ce que**
la section d'ouverture réglée de l'ouverture de passage peut être mesurée et/ou est mesurée par un système de mesure de déplacement absolu ou par incréments.

8. Dispositif conforme à l'une des revendications 5 à 7,
**caractérisé en ce qu'**
il comporte une conduite d'air (13) permettant une alimentation en air chaud, une conduite d'air (14) permettant une alimentation en air froid et/ou une conduite d'air (10) permettant une alimentation en air chaud et en air froid, la soupape d'étranglement réglable (17) étant montée sur au moins l'une des conduites d'air (10, 13, 14).

9. Appareil automatique de préparation de boissons chaudes équipé d'un dispositif permettant l'obtention de mousse de lait conforme à l'une des revendications 5 à 8.
